(19) Europäisches Patentamt / European Patent Office / Office européen des brevets

(11) **EP 4 572 365 A1**

(12) **EUROPEAN PATENT APPLICATION**
published in accordance with Art. 153(4) EPC

(43) Date of publication:
**18.06.2025 Bulletin 2025/25**

(21) Application number: **23858916.2**

(22) Date of filing: **30.06.2023**

(51) International Patent Classification (IPC):
*H04W 16/24* (2009.01)

(52) Cooperative Patent Classification (CPC):
**H04W 16/24; H04W 72/044; H04W 88/08**

(86) International application number:
**PCT/CN2023/104983**

(87) International publication number:
**WO 2024/045878 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.08.2022 CN 202211060794**

(71) Applicant: **Huawei Technologies Co., Ltd.
Shenzhen, Guangdong 518129 (CN)**

(72) Inventors:
• **WANG, Chun**
  **Shenzhen, Guangdong 518129 (CN)**
• **YANG, Wunan**
  **Shenzhen, Guangdong 518129 (CN)**
• **XUE, Chunlin**
  **Shenzhen, Guangdong 518129 (CN)**
• **YANG, Bing**
  **Shenzhen, Guangdong 518129 (CN)**
• **YI, Xuan**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **SIGNAL PROCESSING SYSTEM, REMOTE RADIO UNIT, AND ANTENNA UNIT**

(57)    This application provides a signal processing system, a remote radio unit, and an antenna unit. The signal processing system includes N baseband transmit units, a first power balancing module, a second power balancing module, N baseband receive units, and an antenna unit. The antenna unit includes N antenna ports and a third power balancing module. The first power balancing module and the second power balancing module may be configured to perform power balancing on a plurality of digital signals in an uplink direction and a downlink direction respectively, and the third power balancing module may be configured to perform power balancing on radio frequency signals in the uplink direction and the downlink direction. Therefore, based on this structure, power sharing between different sectors in the downlink direction can be implemented, and an existing RRU structure is adapted. This can improve flexibility of a solution for power sharing between sectors of a base station.

FIG. 5

EP 4 572 365 A1

**Description**

CROSS-REFERENCE TO RELATED APPLICATION

This application claims priority to Chinese Patent Application No. 202211060794.1, filed with the China National Intellectual Property Administration on August 31, 2022 and entitled "SIGNAL PROCESSING SYSTEM, REMOTE RADIO UNIT, AND ANTENNA UNIT", which is incorporated herein by reference in its entirety.

TECHNICAL FIELD

This application relates to the field of communication technologies, and in particular, to a signal processing system, a remote radio unit, and an antenna unit.

BACKGROUND

A base station is a most important part of a cellular mobile communication network, and is configured to implement wireless signal receiving and transmitting between a mobile terminal of a user and a mobile network. Under specified volume, weight, and cost constraints, a downlink transmit power that the base station can achieve is limited. Power sharing can fully utilize a limited radio frequency transmit power of the base station to achieve optimal coverage and optimal downlink performance.

In a current power sharing solution, two bridges (hybrid couplers) need to be disposed in a transmit circuit of an RRU of a base station, and power balancing of a plurality of antenna ports (namely, different sectors) is implemented by using the two bridges. However, in this solution, a currently widely used RRU needs to be greatly improved. Therefore, the existing solution for power sharing between different sectors is not flexible enough.

SUMMARY

This application provides a signal processing system, a remote radio unit, and an antenna unit, to provide a flexible solution for power sharing between different sectors of a base station.

According to a first aspect, this application provides a signal processing system. The system includes N baseband transmit units, a first power balancing module, a second power balancing module, N baseband receive units, and an antenna unit. The antenna unit may include N antenna ports and a third power balancing module, and N is a positive integer greater than 1. The N baseband transmit units may be configured to generate first digital signals to be sent through the N antenna ports. The first power balancing module is configured to perform power balancing on the first digital signals respectively from the N baseband transmit units. The third power balancing module may be configured to: perform power balancing on first high-frequency signals, where the first high-frequency signals are obtained based on power-balanced first digital signals, and send power-balanced first high-frequency signals to the N antenna ports respectively; and the third power balancing module may be further configured to perform power balancing on second high-frequency signals received through the N antenna ports respectively. The second power balancing module may be configured to: perform power balancing on second digital signals, and send power-balanced second digital signals to the N baseband receive units respectively. The second digital signals are obtained based on power-balanced second high-frequency signals. The N baseband receive units may be configured to perform baseband processing on the power-balanced second digital signals.

In this embodiment of this application, the first power balancing module and the second power balancing module may be configured to perform power balancing on a plurality of digital signals in an uplink direction and a downlink direction respectively, and the third power balancing module may be configured to perform power balancing on radio frequency signals in the uplink direction and the downlink direction. Therefore, based on this structure, power sharing between different sectors in the uplink direction can be implemented. The third power balancing module does not belong to a remote radio module. Therefore, no additional bridge needs to be added between a power amplifier and a duplexer (or a filter) of the remote radio module. In this way, the third power balancing module can be flexibly used in an existing RRU to implement power sharing between different sectors. Therefore, based on the signal processing system described in the first aspect, flexibility of a solution for power sharing between sectors of a base station can be improved.

In a possible implementation, the first power balancing module may be specifically configured to perform power balancing on the first digital signals respectively from the N baseband transmit units based on a first power balancing matrix, and the third power balancing module may be specifically configured to perform power balancing on the first high-frequency signals based on a second power balancing matrix, where the first power balancing matrix and the second power balancing matrix are inverse matrices of each other; and/or the second power balancing module may be specifically configured to perform power balancing on the second digital signals based on a third power balancing matrix, and the third power balancing module may be specifically configured to perform power balancing on the second high-frequency signals based on the second power balancing matrix, where the third power balancing matrix and the second power balancing matrix are inverse matrices of each other. Therefore, power balancing effect of the signal processing system can be improved.

In a possible implementation, the first power balancing module may be specifically configured to send the power-balanced first digital signals to N transmit channels. The first high-frequency signals are obtained by the N transmit channels based on the power-balanced first digital signals. The second power balancing module may be specifically configured to receive the second digital signals from N receive channels. The second digital signals are obtained by the N transmit channels based on the power-balanced second high-frequency signals. Each transmit channel may include a first amplitude-phase correction module and a first delay correction module, where the first amplitude-phase correction module may be configured to correct a signal amplitude and a signal phase of the transmit channel, so that signal amplitudes of the N transmit channels are the same and signal phases of the N transmit channels are the same; and the first delay correction module may be configured to correct a signal delay of the transmit channel, so that signal delays of the N transmit channels are the same. Each receive channel may include a second amplitude-phase correction module and a second delay correction module, where the second amplitude-phase correction module may be configured to correct a signal amplitude and a signal phase of the receive channel, so that signal amplitudes of the N receive channels are the same and signal phases of the N receive channels are the same; and the second delay correction module may be configured to correct a signal delay of the receive channel, so that signal delays of the N receive channels are the same.

Based on this implementation, an amplitude-phase correction module (including the first amplitude-phase correction module and the second amplitude-phase correction module) and/or a delay correction module (including the first delay correction module and the second delay correction module) on a radio frequency channel may correct an amplitude, a phase, and a delay of a digital signal transmitted on the radio frequency channel, to eliminate an amplitude difference, a phase difference, and/or a delay difference after the first power balancing module, the second power balancing module, the third power balancing module, and the like are introduced. This improves communication performance.

In a possible implementation, the signal processing system may further include a first amplitude-phase determining module and a first feedback circuit. The first feedback circuit may be configured to obtain the first high-frequency signals respectively output by the N transmit channels. The first amplitude-phase determining module may be configured to determine a first signal amplitude difference, a first signal phase difference, and a first signal delay difference based on the first high-frequency signals respectively output by the N transmit channels. The first amplitude-phase correction module on each transmit channel may be specifically configured to: correct the signal amplitude of the transmit channel based on the first signal amplitude difference, and correct the phase of the transmit channel based on the first signal phase difference. The first delay correction module on each transmit channel may be specifically configured to correct the signal delay of the transmit channel based on the first signal delay difference.

Based on this implementation, the feedback circuit may sample the high-frequency signal output by the transmit channel, and the channel correction module determines the amplitude difference, the signal phase difference, and the signal delay difference that correspond to the transmit channel. In addition, the first amplitude-phase correction module separately corrects the amplitude and the phase based on the amplitude difference and the signal phase difference, and the first delay correction module corrects the delay based on the signal delay difference corresponding to the transmit channel. This improves positive accuracy of correction on the transmit channel.

In a possible implementation, the signal processing system may further include a second amplitude-phase determining module and a second feedback circuit. The second feedback circuit may be configured to obtain the power-balanced second high-frequency signals respectively input by the N receive channels. The amplitude-phase determining module may be configured to determine a second signal amplitude difference, a second signal phase difference, and a second signal delay difference based on the power-balanced second high-frequency signals respectively input by the N receive channels. The second amplitude-phase correction module on each receive channel may be specifically configured to correct the signal amplitude of the receive channel based on the second signal amplitude difference, and correct the phase of the receive channel based on the second signal phase difference. The second delay correction module on each receive channel may be specifically configured to correct the signal delay of the receive channel based on the second signal delay difference.

Based on this implementation, the feedback circuit may sample the high-frequency signal input to the receive channel, and the channel correction module determines the amplitude difference, the signal phase difference, and the signal delay difference that correspond to the receive channel. In addition, the second amplitude-phase correction module separately corrects the amplitude and the phase based on the amplitude difference and the signal phase difference, and the second delay correction module corrects the delay based on the signal delay difference corresponding to the receive channel. This improves positive accuracy of amplitude-phase correction.

According to a second aspect, this application provides a remote radio unit, including a first power balancing module and a second power balancing module. The first power balancing module may be configured to perform power balancing on first digital signals respectively from N baseband transmit units, where balanced first digital signals are used to obtain first high-frequency signals, the first high-frequency signals are used to be sent to an antenna having N antenna ports, and N is an integer greater than 1. The second power balancing module may be configured to: perform power balancing on second digital signals, and send power-balanced second digital signals to N baseband receive units respectively. The second digital signals are obtained based on second high-frequency signals received through the N antenna ports of the antenna.

In a possible implementation, the first power balancing module may be specifically configured to perform power balancing on the first digital signals respectively from the N baseband transmit units based on a first power balancing matrix, where the first power balancing matrix and a second power balancing matrix are inverse matrices of each other; and/or the second power balancing module may be specifically configured to perform power balancing on the second digital signals based on a third power balancing matrix, where the third power balancing matrix and the second power balancing matrix are inverse matrices of each other. The second power balancing matrix is used by the antenna to perform power balancing on the first high-frequency signals, and is used by the antenna to perform power balancing on the second high-frequency signals.

In a possible implementation, the first power balancing module may be specifically configured to send the balanced first digital signals to N transmit channels, where the N antenna channels are connected to the antenna. The second power balancing module may be specifically configured to receive the second digital signals from N receive channels. Each transmit channel may include a first amplitude-phase correction module and a first delay correction module, where the first amplitude-phase correction module is configured to correct a signal amplitude and a signal phase of the transmit channel, so that signal amplitudes of the N transmit channels are the same and signal phases of the N transmit channels are the same; and the first delay correction module may be configured to correct a signal delay of the transmit channel, so that signal delays of the N transmit channels are the same. Each receive channel may include a second amplitude-phase correction module and a second delay correction module, where the second amplitude-phase correction module may be configured to correct a signal amplitude and a signal phase of the receive channel, so that signal amplitudes of the N receive channels are the same and signal phases of the N receive channels are the same; and the second delay correction module may be configured to correct a signal delay of the receive channel, so that signal delays of the N receive channels are the same.

In a possible implementation, the remote radio unit may further include a first feedback circuit, configured to obtain the first high-frequency signals respectively output by the N transmit channels. The first high-frequency signals respectively output by the N transmit channels are used to determine a first signal amplitude difference, a first signal phase difference, and a first signal delay difference. The first amplitude-phase correction module on each transmit channel may be specifically configured to: correct the signal amplitude of the transmit channel based on the first signal amplitude difference, and correct the phase of the transmit channel based on the first signal phase difference. The first delay correction module on each transmit channel may be specifically configured to correct the signal delay of the transmit channel based on the first signal delay difference.

In a possible implementation, the signal processing system may further include a second amplitude-phase determining module and a second feedback circuit. The second feedback circuit may be configured to obtain power-balanced second high-frequency signals respectively input by the N receive channels, where the power-balanced second high-frequency signals respectively input by the N receive channels may be used to determine a second signal amplitude difference, a second signal phase difference, and a second signal delay difference. The second amplitude-phase correction module on each receive channel may be specifically configured to: correct the signal amplitude of the receive channel based on the second signal amplitude difference, and correct the phase of the receive channel based on the second signal phase difference. The second delay correction module on each receive channel may be specifically configured to correct the signal delay of the receive channel based on the second signal delay difference.

According to a third aspect, this application further provides an antenna unit, including N antenna ports and a third power balancing module, where N is an integer greater than 1. The N antenna ports may be configured to receive and send high-frequency signals. The third power balancing module may be configured to: receive first high-frequency signals sent by a remote radio unit, perform power balancing on the first high-frequency signals, and send power-balanced first high-frequency signals to the N antenna ports respectively; and perform power balancing on second high-frequency signals respectively received through the N antenna ports, and send power-balanced second high-frequency signals to the remote radio unit.

In a possible implementation, the third power balancing module may be specifically configured to: perform power balancing on the first high-frequency signals based on a second power balancing matrix, where the second power balancing matrix and a first power balancing matrix are inverse matrices of each other, the first power balancing matrix is used by the remote radio unit to perform power balancing on first digital signals respectively from N baseband transmit units, and balanced first digital signals are used to obtain the first high-frequency signals; and/or perform power balancing on the second high-frequency signals based on the second power balancing matrix, where the second power balancing matrix and a third power balancing matrix are inverse matrices of each other, and the third power balancing matrix is used by the remote radio unit to perform power balancing on second digital signals obtained based on the second high-frequency signals.

According to a fourth aspect, this application further provides a base station. The base station may include the signal processing system according to the first aspect and any possible design of the first aspect, or may include the remote radio unit according to the second aspect and any possible design of the second aspect, or may include the antenna unit according to the third aspect and any possible design of the third aspect.

According to a fifth aspect, an embodiment of this application provides a communication system, including a baseband processing unit, a remote radio unit connected to the baseband processing unit, and an antenna unit. The remote radio unit may have the structure described in the second aspect and any possible design of the second aspect, and/or the antenna unit may have the structure described in the third aspect and any possible design of the third aspect.

For technical effects brought by the second aspect to the fifth aspect, refer to the descriptions in the first aspect. Details are not described herein again.

BRIEF DESCRIPTION OF DRAWINGS

FIG. 1 is a diagram of an architecture of a wireless communication system according to this application;
FIG. 2 is a diagram of an architecture of a base station according to this application;
FIG. 3 is a diagram of a solution for power sharing between carriers according to this application;
FIG. 4 is a diagram of a structure of a base station in a solution for power sharing between sectors in a downlink direction;
FIG. 5 is a diagram of a structure of a signal processing system according to this application; and
FIG. 6 is a diagram of a structure of another signal processing system according to this application.

DESCRIPTION OF EMBODIMENTS

Embodiments of this application provide a signal processing system, a remote radio unit, and an antenna unit. The method and the apparatus are based on a same concept. The method and the apparatus have a similar problem-resolving principle. Therefore, for implementations of the apparatus and the method, refer to each other. Repeated parts are not described again. In descriptions of embodiments of this application, the term "and/or" describes an association relationship between associated objects and indicates that three relationships may exist. For example, A and/or B may indicate the following three cases: Only A exists, both A and B exist, and only B exists. The character "/" generally indicates an "or" relationship between the associated objects. In this application, "at least one" means one or more, and "a plurality of" means two or more. In addition, it should be understood that, in the descriptions of this application, terms such as "first" and "second" are merely used for distinguishing and description, but should not be understood as indicating or implying relative importance, or should not be understood as indicating or implying a sequence.

The data transmission method provided in embodiments of this application may be applied to a 4th generation (4th generation, 4G) communication system, for example, a long term evolution (long term evolution, LTE) communication system, or may be applied to a 5th generation (5th generation, 5G) communication system, for example, a 5G new radio (new radio, NR) communication system, or may be applied to various future communication systems, for example, a 6th generation (6th generation, 6G) communication system. The method provided in embodiments of this application may be further applied to a Bluetooth system, a Wi-Fi system, a LoRa system, or an internet of vehicles system. The method provided in embodiments of this application may be further applied to a satellite communication system. The satellite communication system may be integrated with the foregoing communication system.

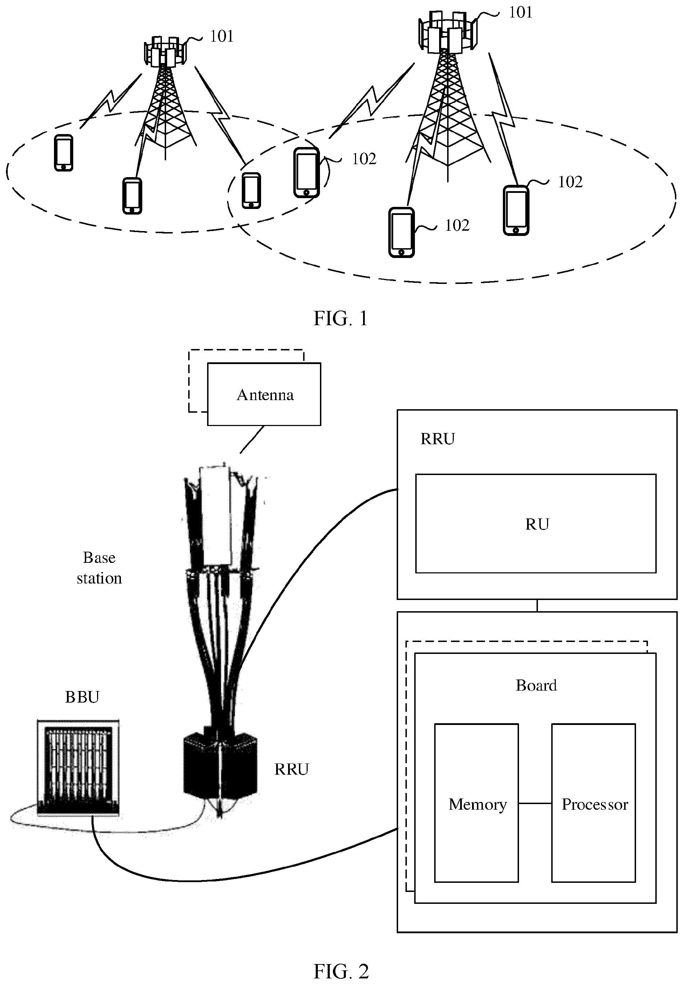

For ease of understanding embodiments of this application, an application scenario used in this application is described by using an architecture of a communication system shown in FIG. 1 as an example. As shown in FIG. 1, the communication system includes network devices 101 and terminal devices 102. The apparatus provided in embodiments of this application may be used in the network device 101 or the terminal device 102. It may be understood that FIG. 1 shows only one possible architecture of the communication system to which embodiments of this application may be applied. In another possible scenario, the architecture of the communication system may alternatively include another device.

The network device 101 is a node in a radio access network (radio access network, RAN), and may also be referred to as a base station or a RAN node (or device). Currently, some examples of an access network device are as follows: a gNB/NR-NB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (base-band unit, BBU), a remote radio unit (remote radio unit, RRU), a wireless fidelity (wireless fidelity, Wi-Fi) access point (access point, AP), a satellite device, a network device in a 5G communication system, or a network device in a possible communication system in the future. Alternatively, the network device 101 may be another device that has a network device function. For example, the network device 101 may alternatively be a device that functions as a network device in device-to-device (device-to-device, D2D) communication, internet of vehicles communication, or machine-to-machine communication. Alternatively, the network device 101 may be a network device in a possible communication system in the future.

In some deployments, the gNB may include a central unit (central unit, CU) and a DU. The gNB may further include a radio unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at the PHY layer, or is converted from information at the PHY layer. Therefore, in the architecture, higher-layer signaling such as RRC layer signaling or PHCP layer signaling may also be considered as being sent by the DU or sent by the DU and the RU. It may be understood that the network device may be a CU node, a DU node, or a device including a CU node and a DU node. In addition, the CU may be classified as a network device in an access network RAN, or the CU may be classified as a network device in a core network CN. This is not limited herein.

The terminal device 102 may also be referred to as user equipment (user equipment, UE), a mobile station (mobile station, MS), a mobile terminal (mobile terminal, MT), or the like, and is a device that provides a user with voice or data connectivity, or may be an internet of things device. For example, the terminal device includes a handheld device, a vehicle-mounted device, or the like that has a wireless connection function. Currently, the terminal device may be a mobile phone, a tablet computer, a laptop computer, a palmtop computer, a mobile internet device (mobile internet device, MID), a wearable device (for example, a smartwatch, a smart band, or a pedometer), a vehicle-mounted device (for example, a car, a bicycle, an electric vehicle, an airplane, a ship, a train, or a high-speed rail), a virtual reality (virtual reality, VR) device, an augmented reality (augmented reality, AR) device, a wireless terminal in industrial control, a smart household device (for example, a refrigerator, a television, an air conditioner, or an electricity meter), an intelligent robot, workshop equipment, a wireless terminal in self driving, a wireless terminal in remote surgery, a wireless terminal in a smart grid (smart grid), a wireless terminal in transportation safety, a wireless terminal in a smart city, a wireless terminal in a smart home, a flight device (for example, an intelligent robot, a hot air balloon, an uncrewed aerial vehicle, or an airplane), or the like. The terminal device may alternatively be another device that has a terminal function. For example, the terminal device may alternatively be a device that functions as a terminal in D2D communication. A terminal device that has wireless receiving and transmitting functions and a chip that can be disposed in the terminal device are collectively referred to as the terminal device in this application.

The following describes the signal processing apparatus and the processing method provided in embodiments of this application by using an example in which the network device is a base station. It may be understood that the base station in embodiments of this application may be replaced with a network device or a component in a network device.

Optionally, as shown in FIG. 2, the base station may include an antenna and an RRU. Optionally, the base station may further include a BBU.

In the structure shown in FIG. 2, the base station may include one or more RRUs, one or more BBUs, and the antenna. The BBU may also be referred to as a digital unit (digital unit, DU), a baseband cell, or the like. The RRU may also be referred to as a transceiver machine, a transceiver circuit, a transceiver, or the like. The RRU may include an RU. The RRU or the RU may be configured to perform conversion between a baseband signal and a radio frequency signal and process a radio frequency signal. The BBU is mainly configured to perform baseband processing, control the base station, and the like, for example, channel coding, multiplexing, modulation, and spectrum spreading. For example, the BBU may be configured to: generate a downlink digital signal through coding and modulation, demodulate and decode an uplink digital signal, and implement uplink and downlink data communication with the UE. The BBU may also be referred to as a baseband unit, a baseband board, or the like. The antenna may be configured to send and receive a radio frequency signal in an electromagnetic wave form.

It may be understood that, in this application, the BBU and the RRU may be physically disposed together. In this case, the base station is a central base station. Alternatively, the BBU and the RRU may be physically disposed separately. In this case, the base station is a distributed base station.

In an example, the BBU may include one or more boards, and a plurality of boards may jointly support a radio access network (for example, an LTE network) that has a single access standard, or may separately support radio access networks (for example, an LTE network, a 5G network, or another network) that have different access standards. This is not specifically limited. Optionally, the BBU further includes a memory and a processor. The memory is configured to store necessary instructions and data. The processor is configured to control the base station to take a necessary action.

It may be understood that, in a working process of the base station, a downlink transmit power is a very important resource. The downlink transmit power directly affects downlink performance of the base station, including a coverage distance, a coverage range, and downlink communication quality. In addition, to transmit a radio frequency power that is large enough, a corresponding power amplifier (PA for short) needs to be designed in a base station product. The power amplifier is usually the most expensive unit circuit in the base station product. The power amplifier during working consumes a large amount of electrical energy and is the most energy-consuming component in the base station. In addition, the power amplifier also generates a large amount of heat during working. To dissipate the heat, the base station product needs to equip the power amplifier with a sufficient heat dissipation capability. Under specified volume, weight, and cost constraints of the base station product, a downlink transmit power that can be achieved is limited. Therefore, a limited radio frequency transmit power of the base station needs to be fully utilized to achieve optimal coverage and optimal downlink performance.

Power sharing is based on an uneven random distribution of traffic in a real environment, and indicates that when a cell has light traffic or no traffic, a transmit power of the cell is allocated to another cell with traffic. Each cell participating in power sharing can obtain more transmit power resources than a mode in which each cell is allocated a fixed transmit power. This is actually a resource pool usage mode, which is equivalent to that a transmit power of each cell participating in power sharing is all put into a large transmit power pool, and then the transmit power is used as needed. The resource pool mode is more efficient than the mode in which each cell is allocated a fixed power resource (which is referred to as an independent resource mode). Even if there are some moments when all cells need to use a maximum transmit power, power resources are still evenly allocated to each cell, which is no worse than using independent resources.

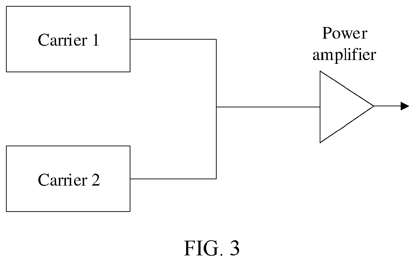

It may be understood that power sharing may occur among a plurality of cells with different frequencies that share a power amplifier. As shown in FIG. 3, a carrier 1 (or a cell 1) and a carrier 2 (or a cell 2) work at a frequency 1 and a frequency 2 respectively, and share one power amplifier. It is assumed that a total output power of the power amplifier is 40 W. Then, each carrier can be allocated an average power of 20 W. In comparison with a case in which each carrier fixedly uses a power of 20 W, in this case, power sharing can be performed between the two carriers (cells) and the total transmit power of 40 W is dynamically allocated.

In addition, power sharing may also occur between different sectors (or referred to as antenna sectors) that do not share a power amplifier. A sector corresponds to an antenna. In other words, different antennas have different sectors.

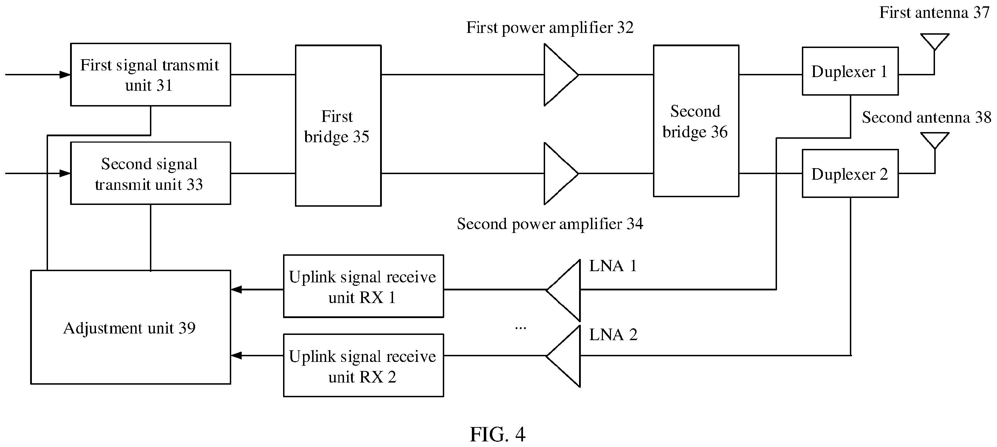

As shown in FIG. 4, in an existing solution for power sharing between different sectors, one bridge is added before and after a first power amplifier 32 and a second power amplifier 34 respectively, namely, a first bridge 35 and a second bridge 36, and an adjustment unit 39 controls signal strength of a first signal transmit unit 31 and a second signal transmit unit 33, so that total output powers of the two power amplifiers (namely, the first power amplifier 32 and the second power amplifier 34) may be allocated between two antennas (namely, a first antenna 37 and a second antenna 38) to implement power sharing between the two antennas (and two corresponding sectors).

However, the sector power sharing solution shown in FIG. 4 is not flexible enough and needs to be improved. Specifically, a boundary of the RRU and the antenna is usually a duplexer antenna port. In the solution shown in FIG. 4, a duplexer and a structure on a left side of the duplexer belong to the RRU, and a structure on a right side of the duplexer belongs to the antenna. However, in a current common design solution of the RRU, no bridge is added between the duplexer and the power amplifier. Therefore, the solution shown in FIG. 4 requires design and development of an RRU that is different from that in a conventional solution, resulting in an additional RRU model. This is unfavorable to RRU normalization and cost reduction.

To improve flexibility of the sector power sharing solution, embodiments of this application provide a signal processing system. In this application, the signal processing system may be a base station or a part of the base station.

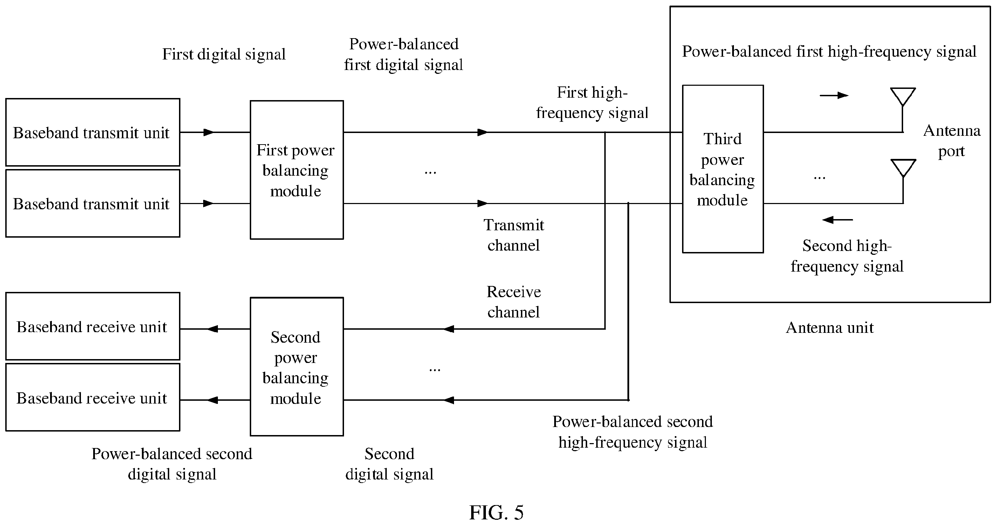

As shown in FIG. 5, the signal processing system provided in embodiments of this application may include N baseband transmit units, a first power balancing module, a second power balancing module, N baseband receive units, and an antenna unit (or referred to as an antenna). The antenna unit may include N antenna ports and a third power balancing module.

In this application, unless otherwise specified, a signal includes a digital signal or an analog signal.

Optionally, the N baseband transmit units and the N baseband receive units may be included in a baseband unit. The first power balancing module and the second power balancing module may be included in a remote radio unit. The baseband unit may include a BBU or include some components in the BBU, and the remote radio unit may include an RRU or include some components in the RRU.

Optionally, the remote radio unit may further include a plurality of radio frequency channels, including N receive channels and N transmit channels. The receive channel may be used to convert an input high-frequency signal into a digital signal and output the digital signal. The transmit channel may be used to convert an input digital signal into a high-frequency signal and output the high-frequency signal.

As shown in FIG. 5, the N baseband transmit units are configured to perform baseband processing on signals to be sent through the N antenna ports, or may be configured to generate signals to be sent through the N antenna ports. The N baseband receive units may be configured to perform baseband processing on signals received by the antenna. In this application, N is an integer greater than 1. In FIG. 5, N=2 is used as an example for description.

The first power balancing module may be configured to perform power balancing on first digital signals respectively from the N baseband transmit units. Power-balanced first digital signals may be used to obtain first high-frequency signals. In other words, the first high-frequency signals are obtained based on the power-balanced first digital signals. The first high-frequency signals may be obtained by the N transmit channels based on the power-balanced first digital signals.

Optionally, the first power balancing module may include N input ends and N output ends. The N input ends of the first power balancing module are respectively connected to output ends of the N baseband transmit units. The first power balancing module may receive the first digital signals from the N baseband transmit units through the input ends, and perform power balancing on the first digital signals. Optionally, the N baseband transmit units may generate N first digital signals. The N output ends of the first power balancing module are connected to input ends of the N transmit channels. Therefore, the balanced first digital signals may be sent to the N transmit channels. The N transmit channels may be configured to: convert the first digital signals into high-frequency signals (or referred to as radio frequency signals), obtain the first high-frequency signals, and send the first high-frequency signals to the third power balancing module.

The third power balancing module may be configured to: perform power balancing on the first high-frequency signals, and send power-balanced first high-frequency signals to the N antenna ports respectively, so that the power-balanced first high-frequency signals are sent through the N antenna ports. In addition, the third power balancing module may be further configured to perform power balancing on second high-frequency signals received through the N antenna ports of the antenna unit. The N antenna ports may receive N second high-frequency signals. Optionally, the third power balancing module may be further configured to send balanced second high-frequency signals to the N receive channels.

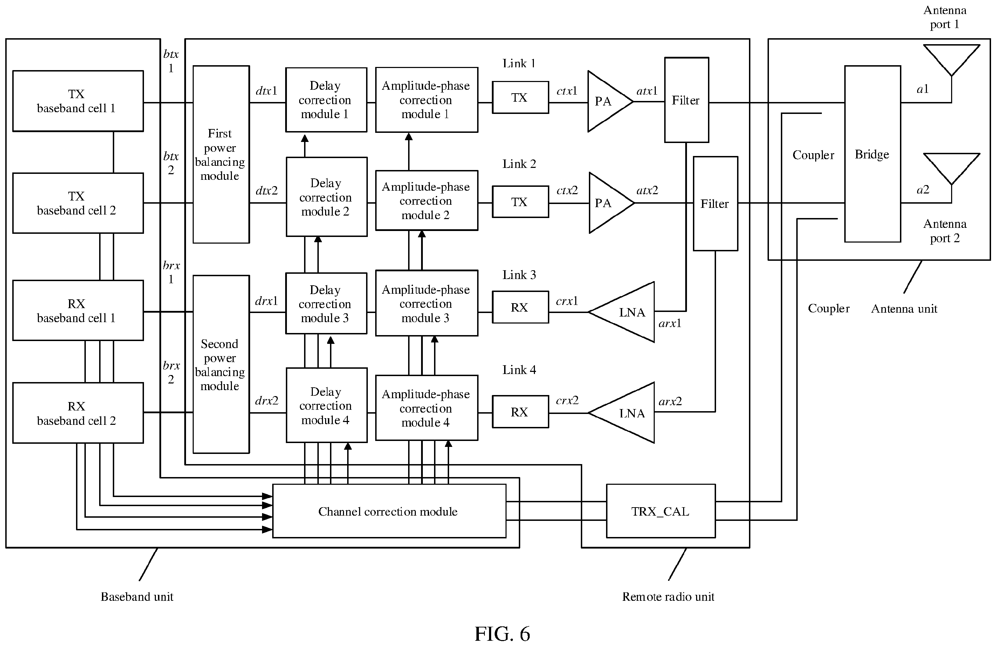

Optionally, N first-side ports of the third power balancing module are respectively connected to the N antenna ports. N second-side ports of the third power balancing module are respectively connected to output ends of the N transmit channels, and the N second-side ports of the third power balancing module are further respectively connected to input ends of the N receive channels. In other words, the third power balancing module may be configured to: perform power balancing on the first high-frequency signals respectively output by the output ends of the transmit channels, and/or perform power balancing on the second high-frequency signals. The first-side port and the second-side port may respectively serve as an input end or a transmit end of the third power balancing module. The following provides description with reference to a structure shown in FIG. 6, and details are not described herein.

In addition, the second power balancing module may perform power balancing on second digital signals, and send power-balanced second digital signals to the N baseband receive units respectively, and the N baseband receive units perform baseband processing on the power-balanced second digital signals. The second digital signals are obtained based on the power-balanced second high-frequency signals, or the power-balanced second high-frequency signals correspond to the second digital signals. Optionally, the second digital signals may be obtained by the N transmit channels based on the power-balanced second high-frequency signals.

Optionally, the second power balancing module may include N input ends and N output ends. The N input ends of the second power balancing module are respectively connected to output ends of the N receive channels. Therefore, the second power balancing module may be configured to perform power balancing on digital signals respectively output by the output ends of the N receive channels, and the input ends of the N receive channels may be respectively connected to the N second-side ports of the third power balancing module. The N output ends of the second power balancing module are respectively connected to input ends of the N baseband receive units. The N receive channels may receive the power-balanced second high-frequency signals from the third power balancing module, obtain the second digital signals based on the power-balanced second high-frequency signals, and output the second digital signals to the N input ends of the second power balancing module.

Based on the structure shown in FIG. 5, the first power balancing module and the second power balancing module may be configured to perform power balancing on a plurality of digital signals in an uplink direction and a downlink direction respectively, and the third power balancing module may be configured to perform power balancing on radio frequency signals in the uplink direction and the downlink direction. The third power balancing module does not belong to a remote radio module. Therefore, no additional bridge needs to be added between a power amplifier and a duplexer (or a filter) of the remote radio module. In this way, the third power balancing module can be flexibly used in an existing RRU to implement power sharing between different sectors, and flexibility of a solution for power sharing between different sectors of the base station can be improved.

Optionally, one or more modules in the third power balancing module may be implemented by using a bridge. When N=2, in an example, the third power balancing module is a radio frequency bridge. When N=3 or N is an integer greater than 3, a plurality of bridges may be cascaded or a similar design may be used for implementation. The first power balancing module and/or the second power balancing module can implement power balancing through NxN matrix operation in a digital domain, and factors of a power balancing matrix of the first power balancing module and/or the second power balancing module are complex numbers.

In this application, power balancing may be understood as follows: A power balancing module performs weighted processing on powers of a plurality of signals based on a power balancing matrix, and obtains a plurality of processed signals. The power balancing matrix may be a weight matrix in essence. Therefore, the power balancing matrix of the power balancing module can be designed to implement power sharing. It may be understood that the power balancing matrix in this application represents a relationship between an input signal and an output signal of the power balancing module.

Optionally, a power balancing matrix (which may be referred to as a first power balancing matrix) of the first power balancing module shown in FIG. 5 and a power balancing matrix (which may be referred to as a second power balancing matrix) of the third power balancing module shown in FIG. 5 are inverse matrices of each other. In addition, a power balancing matrix (which may be referred to as a third power balancing matrix) of the second power balancing module and the power balancing matrix of the third power balancing module are inverse matrices of each other.

Specifically, the first power balancing module may be configured to perform power balancing on the first digital signals respectively from the N baseband transmit units based on the first power balancing matrix.

The third power balancing module may be configured to perform power balancing on the first high-frequency signals based on the second power balancing matrix; and/or the third power balancing module may be configured to perform power balancing on the second high-frequency signals based on the second power balancing matrix.

The second power balancing module may be configured to perform power balancing on the second digital signals based on the third power balancing matrix.

For example, the third power balancing module is a bridge shown in FIG. 6, and the N transmit channels are a link 1 and a link 2 shown in FIG. 6 (that is, N=2). Then, the power balancing matrix (namely, the first power balancing matrix) [C] of the first power balancing module satisfies the following formula:

$$\begin{bmatrix} \text{dtx1} \\ \text{dtx2} \end{bmatrix} = [C] \begin{bmatrix} \text{btx1} \\ \text{btx2} \end{bmatrix}.$$

*btx*1 and *btx*2 respectively represent two signals (namely, two first digital signals) input to the first power balancing module, and *dtx*1 and *dtx*2 respectively represent two signals (namely, two power-balanced first digital signals) output by the first power balancing module. [C] is a 2x2 matrix, and each factor in the matrix is a complex number in frequency domain. As shown in FIG. 6, *btx*1 and *btx*2 are respectively generated by a TX baseband cell 1 and a TX baseband cell 2, and are sent to two input ends of the first power balancing module through output ends of the TX baseband cell 1 and the TX baseband cell 2, and two output ends of the first power balancing module are respectively connected to an input end of the link 1 and an input end of the link 2. The TX baseband cell 1 and the TX baseband cell 2 may serve as the baseband transmit units in the embodiment in FIG. 5 respectively.

In addition, *ctx*1 and *ctx*2 in FIG. 6 respectively represent high-frequency signals before power amplification is performed on the link 1 and the link 2, and *atx*1 and *atx*2 may be respectively obtained based on *ctx*1 and *ctx*2 on which power amplification is performed. *atx*1 and *atx*2 are first high-frequency signals generated by the link 1 and the link 2 respectively.

Correspondingly, the power balancing matrix (namely, the second power balancing matrix) [A] of the bridge satisfies the following formula:

$$\begin{bmatrix} a1 \\ a2 \end{bmatrix} = [A] \begin{bmatrix} atx1 \\ atx2 \end{bmatrix}.$$

As shown in FIG. 6, *atx*1 and *atx*2 respectively represent two signals (namely, two first high-frequency signals) input from the link 1 and the link 2 to the first power balancing module, *a*1 and *a*2 respectively represent two signals (namely, two power-balanced first high-frequency signals) output by the first power balancing module, and *atx*1 and *atx*2 are respectively output to an antenna port 1 and an antenna port 2. [A] is a 2x2 matrix, and each factor in the matrix is a complex number in frequency domain.

Optionally, [A] [C] = I, that is, [A] and [C] are inverse matrices of each other, where I is a 2x2 identity matrix.

In a possible example, [A] satisfies the following formula:

$$[A] = \tfrac{1}{\sqrt{2}} \begin{bmatrix} 1 & j \\ j & 1 \end{bmatrix}.$$

Correspondingly, [C] satisfies the following formula:

$$[C] = \tfrac{1}{\sqrt{2}} \begin{bmatrix} 1 & -j \\ -j & 1 \end{bmatrix}.$$

Similarly, the power balancing matrix (namely, the third power balancing matrix) of the second power balancing module in FIG. 6 and the power balancing matrix of the bridge are inverse matrices of each other.

As shown in FIG. 6, for an uplink signal, $a1$ and $a2$ respectively represent two second high-frequency signals received through the antenna port 1 and the antenna port 2, and $arx1$ and $arx2$ respectively represent second high-frequency signals on which power balancing is performed by the third power balancing module. $drx1$ and $drx2$ respectively represent second digital signals. $brx1$ and $brx2$ respectively represent second digital signals on which power balancing is performed by the second power balancing module.

Optionally, based on the foregoing relationship between the respective power balancing matrices of the first power balancing module, the second power balancing module, and the third power balancing module, in this application, the power balancing matrix of the third power balancing module may be first determined, and then the power balancing matrix of the first power balancing module and the power balancing matrix of the second power balancing module are determined based on the power balancing matrix of the third power balancing module.

Optionally, in this application, the N first-side ports and the N second-side ports of the third power balancing module may respectively serve as input ends and output ends when signals in different directions are processed. For example, in FIG. 6, N=2 is used as an example. A first-side port of the bridge is a port connected to the antenna port 1 and the antenna port 2, and a second-side port of the bridge is a port connected to the link 1 to a link 4. When the bridge performs power balancing on signals (namely, two first high-frequency signals) respectively output by the link 1 and the link 2, the first-side port of the bridge is an input port, and the second-side port of the bridge is an output port. When the bridge performs power balancing on signals (namely, two second high-frequency signals respectively received through the antenna port 1 and the antenna port 2) respectively input to the link 3 and the link 4, the second-side port of the bridge is an input port, and the first-side port of the bridge is an output port.

Optionally, the N receive channels and the N transmit channels of the remote radio unit may be coupled in one-to-one correspondence through a duplexer (or a coupler such as a filter and a switch). The duplexer belongs to a corresponding transmit channel or a corresponding receive channel. For example, as shown in FIG. 6, an example in which a quantity of transmit channels and a quantity of receive channels are both 2 is used. An output end of the link 1 and an input end of the link 3 are coupled through a filter, and an output end of the link 2 and an input end of the link 4 are coupled through a filter.

Optionally, the radio frequency channel (including the transmit channel or the receive channel) in this application may further include a signal conversion module and a power amplifier module.

The signal conversion module in this application may include a transmit (TX) module or a receive (RX) module.

The TX module may be configured to: convert, into a radio frequency band signal, a downlink digital signal that is from the BBU and that has undergone delay (or referred to as signal delay) and amplitude-phase (or referred to as signal amplitude-phase) correction, including at least one of processing such as filtering, frequency shifting, combination, clipping, and pre-distortion in a digital domain, converting the digital signal into an analog signal through a digital-to-analog converter (digital-to-analog converter, DAC), and converting the analog signal onto a radio frequency band through a quadrature modulation (IQ modulation) modulator, and may be configured to perform processing such as filtering, amplification, and amplitude adjustment on a radio frequency band signal. It may be understood that, if the signal conversion module is a TX module, the radio frequency channel is a TX channel (or referred to as a transmit circuit), and a signal transmitted on the radio frequency channel is a transmit signal.

The RX module may be configured to: process an uplink signal received by the antenna from a UE, convert a radio frequency signal into a digital signal through an analog-to-digital converter (analog-to-digital converter, ADC), and provide the digital signal to a baseband for demodulation. In general, a signal processing process of the RX module is opposite to that of the TX module. It may be understood that, if the signal conversion module is an RX module, the radio frequency channel is an RX channel (or referred to as a receive circuit), and a signal transmitted on the radio frequency channel is a receive signal.

For the transmit channel, the power amplifier module may include a power amplifier (power amplifier, PA).

For the receive channel, the power amplifier module may include a low noise amplifier (low noise amplifier, LNA).

In a possible embodiment, to perform amplitude-phase correction and delay correction on the radio frequency channel, any radio frequency channel includes an amplitude-phase correction module and a delay correction module. It may be understood that amplitude-phase correction and delay correction in this application are performed on a digital signal on the radio frequency channel. It may be further understood that the amplitude-phase in this application is an amplitude and/or a phase. Optionally, the amplitude-phase correction module may include an amplitude correction module and a phase correction module.

The amplitude-phase correction module may be configured to correct an amplitude and a phase of the radio frequency channel, and the delay correction module may be configured to correct a delay of the radio frequency channel, so that a channel delay, an amplitude, and a phase that participate in power balancing each time are the same. This correction is performed on the digital signal. In other words, the delay correction module and the amplitude-phase correction module are located between the power balancing module and the signal conversion module.

Optionally, in this application, an amplitude-phase correction module on the transmit channel may be referred to as a first amplitude-phase correction module, and the first amplitude-phase correction module may be configured to correct a signal amplitude and a signal phase of the transmit channel. In addition, an amplitude-phase correction module on the receive channel may be referred to as a second amplitude-phase correction module, and the second amplitude-phase correction module may be configured to correct a signal amplitude and a signal phase of the receive channel. In addition, a delay correction module on the transmit channel may be referred to as a first delay correction module, and the first delay correction module may be configured to correct a signal delay of the transmit channel. In addition, a delay correction module on the receive channel may be referred to as a second delay correction module, and the second delay correction module may be configured to correct a signal delay of the receive channel.

For example, the delay correction module is represented as "delay correction" in FIG. 6, and the amplitude-phase correction module is represented as "phase correction" in FIG. 6.

Specifically, the amplitude-phase correction module is configured to correct an amplitude and/or a phase of the radio frequency channel based on an amplitude-phase correction parameter. The delay correction module is configured to correct a delay of the radio frequency channel based on a delay correction parameter. It may be understood that the phase correction parameter is a phase shift of the phase correction module, and the delay correction parameter is a delay of the delay correction module.

The amplitude-phase correction parameter corresponding to any radio frequency channel is determined based on at least an amplitude and a phase of a signal conversion module of the any radio frequency channel and an amplitude and a phase of a power amplifier module of the any radio frequency channel. The delay correction parameter corresponding to any radio frequency channel is determined based on at least a delay of a signal conversion module of the any radio frequency channel and a delay of a power amplifier module of the any radio frequency channel.

In a diagram of a possible structure of the signal processing apparatus shown in FIG. 6, the transmit channel may include the link 1 and the link 2. Each of the link 1 and the link 2 includes an amplitude-phase correction module, a delay correction module, a signal conversion module (for example, a TX and an RX in FIG. 6, respectively representing a TX module and an RX module), and a power amplifier module (for example, a PA and an LNA in FIG. 6).

In addition, as shown in FIG. 6, the link 1 and the link 2 are connected through the first power balancing module, the link 3 and the link 4 are connected through the second power balancing module, the link 1 and the link 3 are coupled to form a link A through the filter, the link 2 and the link 4 are coupled to form a link B through the filter, the link A and the link B are connected to the bridge, and the other side of the bridge is separately connected to the antenna port 1 and the antenna port 2.

In a possible example, the bridge may be a bridge with 3 decibels (dB). The bridge has the power balancing matrix [$A$] described in this application. The first power balancing module and the second power balancing module implement power balancing by using digital circuits respectively, and have the power balancing matrix [C] described in this application.

In FIG. 6, an amplitude-phase correction parameter of an amplitude-phase correction module 1 is determined based on at least an amplitude and a phase of a signal conversion module 1 and an amplitude and a phase of a power amplifier module 1; and the signal conversion module 1, the amplitude-phase correction module 1, and the power amplifier module 1 correspond to the link 1. An amplitude-phase correction parameter of an amplitude-phase correction module 2 is determined based on at least an amplitude and a phase of a signal conversion module 2 and an amplitude and a phase of a power amplifier module 2; and the signal conversion module 2, the amplitude-phase correction module 2, and the power amplifier module 2 correspond to the link 2. A delay correction parameter of a delay correction module 1 is determined based on at least a delay of the signal conversion module 1 and a delay of the power amplifier module 1; and the delay correction module 1 corresponds to the link 1. A delay correction parameter of a delay correction module 2 is determined based on at least a delay of the signal conversion module 2 and a delay of the power amplifier module 2; and the delay correction module 2 corresponds to the link 2.

Optionally, in a process of performing amplitude-phase correction, it is assumed that:
a sum of the amplitude-phase correction parameter of the amplitude-phase correction module 1, the amplitude and the phase of the signal conversion module 1, and the amplitude and the phase of the power amplifier module 1 is equal to a sum of the amplitude-phase correction parameter of the amplitude-phase correction module 2, the amplitude and the phase of the signal conversion module 2, and the amplitude and the phase of the power amplifier module 2.

It may be understood that an overall amplitude and phase of the transmit channels may also be measured, and amplitudes and phases of a plurality of transmit channels are corrected based on the amplitude-phase correction parameter and a measured value of the amplitude and the phase. For example, a measured value of an amplitude and a phase of the link 1 includes the amplitude and the phase of the signal conversion module 1, the amplitude and the phase of the power amplifier module 1, and the like.

In addition, optionally, in a process of performing delay correction, it is assumed that:
a sum of the delay correction parameter of the delay correction module 1, the delay of the signal conversion module 1, and the delay of the power amplifier module 1 is equal to a sum of the delay correction parameter of the delay correction module 2, the delay of the signal conversion module 2, and the delay of the power amplifier module 2.

It may be understood that an overall delay of the transmit channel may also be measured, and delays of the plurality of transmit channels are corrected based on the delay correction parameter and a measured value of the delay. For example, a measured value of a delay of the link 1 includes an amplitude and a phase including the delay of the signal conversion module 1, the delay of the power amplifier module 1, and the like.

Similarly, the receive channel may include the link 3 and the link 4, and each of the link 3 and the link 4 includes an amplitude-phase correction module, a delay correction module, a signal conversion module (for example, an RX module in FIG. 6), and a power amplifier module (for example, an LNA in FIG. 6). For functions of the amplitude-phase correction module, the delay correction module, the signal conversion module, and the power amplifier module, refer to the descriptions above. Details are not described herein again.

Optionally, in this application, the amplitude-phase correction parameter corresponding to the any radio frequency channel may be further determined based on an amplitude-phase difference of the radio frequency channel; and/or the delay correction parameter corresponding to the any radio frequency channel may be further determined based on a delay difference of the radio frequency channel.

Optionally, the signal processing apparatus may further include a feedback circuit, configured to obtain, through sampling, high-frequency signals respectively output by the N transmit channels and/or high-frequency signals respectively input by the N receive channels. For example, the feedback circuit obtains, through a device such as a coupler, the high-frequency signals respectively output by the N transmit channels and/or the high-frequency signals respectively input by the N receive channels. Optionally, the feedback circuit may include a transceiver (transceiver, TRX) or include a TX or an RX, and is configured to perform analog-to-digital conversion on a sampled analog signal, for example, amplification, filtering, or frequency conversion. A processed signal may be used by a channel correction module to determine a first signal amplitude difference, a first signal phase difference, and a first signal delay difference that correspond to the N transmit channels; and/or may be used by the channel correction module to determine a second signal amplitude difference, a second signal phase difference, and a second signal delay difference that correspond to the N receive channels. Optionally, the feedback circuit belongs to the remote radio unit, and the channel correction module belongs to the baseband unit.

As shown in FIG. 6, the feedback circuit may include a coupler, a TRX_CAL module, and a link between the coupler and the TRX_CAL module; and optionally, the feedback circuit may further include a link between the TRX_CAL module and the channel correction module. The TRX_CAL module is a type of TRX.

Optionally, the feedback circuit may include a first feedback circuit and a second feedback circuit. The first feedback circuit may be configured to obtain, through sampling, the high-frequency signals (namely, the first high-frequency signals) respectively output by the N transmit channels, and the second feedback circuit may be configured to obtain, through sampling, the high-frequency signals (namely, the power-balanced second high-frequency signals) respectively input by the N receive channels. Further, optionally, the first feedback circuit and the second feedback circuit may use a same TRX and a same coupler, or may correspond to a TX and an RX respectively. It may also be understood that the first feedback circuit and the second feedback circuit correspond to a same link, a same coupler, a same TRX_CAL module, and a same channel correction module, and a difference lies in that signal sampling directions are different.

In addition, optionally, the channel correction module may include a first amplitude-phase determining module (or having another name, such as a first determining module) and a second amplitude-phase determining module (or having another name, such as a second determining module), or the channel correction module consists of a first amplitude-phase determining module and a second amplitude-phase determining module. The first amplitude-phase determining module may be configured to determine the first signal amplitude difference, the first signal phase difference, and the first signal delay difference based on the first high-frequency signals obtained by the first feedback circuit through sampling. The first signal amplitude difference, the first signal phase difference, and the first signal delay difference respectively represent an amplitude difference, a phase difference, and a delay difference that are generated by the transmit channel for signals.

Specifically, the first amplitude-phase determining module may be configured to determine the first signal amplitude difference, the first signal phase difference, and the first signal delay difference based on the first high-frequency signals respectively output by the N transmit channels and the first digital signals respectively output by the N baseband transmit units. Optionally, a delay is used as an example. The first amplitude-phase determining module may determine, based on a delay difference between the first high-frequency signals and a delay difference between the first digital signals, a difference between the delay difference between the first high-frequency signals and the delay difference between the first digital signals as a first delay difference.

Further, optionally, the first amplitude-phase correction module on each transmit channel may correct the signal amplitude and the signal phase of the transmit channel based on the first signal amplitude difference and the first signal phase difference. In addition, the first delay correction module on each transmit channel may correct the signal delay of the transmit channel based on the first signal delay difference.

In addition, the second amplitude-phase determining module may be configured to determine the second signal amplitude difference, the second signal phase difference, and the second signal delay difference based on the power-balanced second high-frequency signals that are respectively input by the N receive channels and that are obtained by the second feedback circuit through sampling. The second signal amplitude difference, the second signal phase difference, and the second signal delay difference respectively represent an amplitude difference, a phase difference, and a delay difference that are generated by the receive channel for signals.

Specifically, the second amplitude-phase determining module may be configured to determine the second signal amplitude difference, the second signal phase difference, and the second signal delay difference based on the power-balanced second high-frequency signals respectively input by the N receive channels and the power-balanced second digital signals input to the N baseband receive units.

Optionally, the second amplitude-phase correction module on each receive channel may correct the signal amplitude and the signal phase of the receive channel based on the second signal amplitude difference and the second signal phase difference. In addition, the second delay correction module on each receive channel may correct the signal delay of the receive channel based on the second signal delay difference.

Optionally, functions of the first amplitude-phase determining module and the second amplitude-phase determining module may be implemented by the channel correction module. The first amplitude-phase determining module and the second amplitude-phase determining module may alternatively be integrated into one module, which is not specifically required.

FIG. 6 is still used as an example. The feedback circuit may separately obtain, through the coupler, signals transmitted on the link A and the link B, and input processed signals to the channel correction module after the signals are processed by the TRX_CAL module. The TRX_CAL module is a transceiver. It may be understood that the channel correction module in FIG. 6 may be configured to implement the functions of the first amplitude-phase determining module and the second amplitude-phase determining module.

The following describes a signal processing process of the signal processing apparatus shown in FIG. 6 by using a process of processing downlink signals (namely, the signals transmitted on the link 1 and the link 2) as an example. The process may include the following steps.

S201: The TX baseband cell 1 and the TX baseband cell 2 respectively generate the first digital signals *btx*1 and *btx2.*

S202: After power balancing is performed by the first power balancing module, obtain the baseband-processed first digital signals *dtx*1 and *dtx2,* which satisfy the following formula:

$$\begin{bmatrix} dtx1 \\ dtx2 \end{bmatrix} = [C] \begin{bmatrix} btx1 \\ btx2 \end{bmatrix} = \frac{1}{\sqrt{2}} \begin{bmatrix} 1 & -j \\ -j & 1 \end{bmatrix} \begin{bmatrix} btx1 \\ btx2 \end{bmatrix} = \begin{bmatrix} \frac{1}{\sqrt{2}} btx1 - \frac{j}{\sqrt{2}} btx2 \\ -\frac{j}{\sqrt{2}} btx1 + \frac{1}{\sqrt{2}} btx2 \end{bmatrix}.$$

S203: After processing is performed by the delay correction module, the amplitude-phase correction module, and the TX module, obtain the high-frequency signals *ctx*1 and *ctx2. ctx*1 and *ctx2* may be considered as signals obtained after *dtx*1 and *dtx2* are affected by a delay, an amplitude, and a phase of the TX module, and then undergo delay, amplitude, and phase correction, that is:

$$\begin{bmatrix} ctx1 \\ ctx2 \end{bmatrix} = \begin{bmatrix} dtx1(t - t1x - t1y) * e^{j(\varphi1x+\varphi1y)} \\ dtx2(t - t2x - t2y) * e^{j(\varphi2x+\varphi2y)} \end{bmatrix}.$$

t1x and t2x are respectively delays of the link 1 and the link 2, and may be determined by the channel correction module based on a delay difference between the link 1 and the link 2. t1y and t2y are respectively delays of the delay correction modules of the link 1 and the link 2. $\varphi1x$ and $\varphi2x$ are respectively phase shifts of the 2 link 1 and the link 2, and may be determined by the channel correction module based on a phase difference between the link 1 and the link 2. $\varphi1y$ and $\varphi2y$ are respectively phases (namely, phase correction parameters) of the amplitude-phase correction modules of the link 1 and the link 2.

t1x, t2x, t1y, and t2y satisfy the following formula:

$$t1x + t1y = t2x + t2y = t0.$$

$\varphi1x, \varphi2x, \varphi1y,$ and $\varphi2y$ satisfy the following formula:

$$\varphi1x + \varphi1y = \varphi2x + \varphi2y = \varphi0.$$

*ctx*1 and *ctx*2 satisfy the following formula:

$$\begin{bmatrix} ctx1 \\ ctx2 \end{bmatrix} = \begin{bmatrix} dtx1(\text{t} - \text{t0}) * e^{j\varphi0} \\ dtx2(\text{t} - \text{t0}) * e^{j\varphi0} \end{bmatrix}$$

S204: After power amplification, a downlink signal on the link 1 is amplified *G*1 times, that is, *G*1 is a power amplifier coefficient of the link 1, a downlink signal on the link 2 is amplified G2 times, that is, *G2* is a power amplifier coefficient of the link 2, and the first high-frequency signals output by the link 1 and the link 2 are respectively represented as *atx*1 and *atx*2. Then:

$$\begin{bmatrix} atx1 \\ atx2 \end{bmatrix} = \begin{bmatrix} G1 \\ G2 \end{bmatrix} * \begin{bmatrix} ctx1 \\ ctx2 \end{bmatrix} = G * \begin{bmatrix} dtx1(\text{t} - \text{t0}) * e^{j\varphi0} \\ dtx2(\text{t} - \text{t0}) * e^{j\varphi0} \end{bmatrix}.$$

In a possible implementation, the TRX_CAL module may process a digital signal collected by the coupler, and the channel correction module determines an amplitude-phase difference and/or a delay difference of digital signals of uplink and downlink transmit and receive signals. The amplitude-phase difference and/or the delay difference may be used to implement amplitude-phase correction and delay correction for the power amplifier module.

After the signal processing process, the first high-frequency signals *atx*1 and *atx*2 and the first digital signals *btx*1 and *btx2* satisfy the following formula:

$$\begin{bmatrix} a1 \\ a2 \end{bmatrix} = [A] \begin{bmatrix} atx1 \\ atx2 \end{bmatrix} = [A] * \begin{bmatrix} G1 \\ G2 \end{bmatrix} * \begin{bmatrix} ctx1 \\ ctx2 \end{bmatrix} = [A] * \begin{bmatrix} G1 \\ G2 \end{bmatrix} * \begin{bmatrix} dtx1(\text{t} - \text{t0}) * e^{j\varphi0} \\ dtx2(\text{t} - \text{t0}) * e^{j\varphi0} \end{bmatrix}$$

$$= [A] * \begin{bmatrix} G1 \\ G2 \end{bmatrix} * [C] \begin{bmatrix} btx1(\text{t} - \text{t0}) * e^{j\varphi0} \\ btx2(\text{t} - \text{t0}) * e^{j\varphi0} \end{bmatrix} = \begin{bmatrix} G1 \\ G2 \end{bmatrix} * \begin{bmatrix} btx1(\text{t} - \text{t0}) * e^{j\varphi0} \\ btx2(\text{t} - \text{t0}) * e^{j\varphi0} \end{bmatrix}$$

It can be seen that, after the signal processing process, the first digital signal *btx*1 generated by the TX baseband cell 1 is still transmitted through the antenna port 1 corresponding to the TX baseband cell 1, and the first digital signal *btx2* generated by the TX baseband cell 2 is still transmitted through the antenna port 2 corresponding to the TX baseband cell 2. Therefore, downlink transmit signals of two sectors respectively corresponding to the antenna port 1 and the antenna port 2 are independent of each other, and mutual interference between the two sectors (or cells) does not occur. In other words, a signal generated by the TX baseband cell 1 is not transmitted to an antenna a2, or a signal generated by the TX baseband cell 2 is not transmitted to an antenna a1.

For a transmit power, a transmit power originally belonging to the TX baseband cell 2 may be completely shared to the TX baseband cell 1 for use. A sharing method is as follows: When no user needs to be served in the TX baseband cell 2 at a moment, a baseband signal amplitude of the TX baseband cell 2 is reduced to 0, that is, *btx*2=0, and a power of *btx*1 is increased by one time (that is, the signal amplitude is increased by sqrt(2) times, where sqrt(2) represents a root operation), as shown in the following formula:

$$\begin{bmatrix} btx1 \\ btx2 \end{bmatrix} = \begin{bmatrix} \sqrt{2}btx1 \\ 0 \end{bmatrix}.$$

When there is no first power balancing module, increasing the signal power of the cell 1 by one time is not feasible. This is because an original signal amplitude *btx*1 has reached a maximum output power capability of the power amplifier, and a further increase causes compression of an output signal of the power amplifier. This results in the following two problems: (1) Quality of a compressed signal decreases. For example, an error vector magnitude (error vector magnitude, EVM) increases, and such a quality decrease offsets a gain of the increased power. (2) A power of the compressed signal is less than twice an expected power.

However, under an action of the first power balancing module, according to the foregoing step (2), the signals *dtx*1 and *dtx2* calculated based on [C] satisfy the following formula:

$$\begin{bmatrix} dtx1 \\ dtx2 \end{bmatrix} = [C] \begin{bmatrix} \sqrt{2}btx1 \\ 0 \end{bmatrix} = \frac{1}{\sqrt{2}} \begin{bmatrix} 1 & -j \\ -j & 1 \end{bmatrix} \begin{bmatrix} btx1 \\ btx2 \end{bmatrix} = \begin{bmatrix} btx1 \\ -j * btx1 \end{bmatrix}.$$

It can be learned from the formula that, although $\sqrt{2}btx1$ indicates that the signal power of the cell 1 is multiplied, after the power balancing matrix [C] of the first power balancing module performs processing, signal amplitudes of two output signals (*btx*1 and *- j * btx*1) remain unchanged. For subsequent power amplifiers, input signal amplitudes remain unchanged, and output signals of the power amplifiers are not compressed. In this case, downlink transmit signals *a*1 and *a*2 output to the antenna satisfy the following formula:

$$\begin{bmatrix} a1 \\ a2 \end{bmatrix} = \begin{bmatrix} G1 \\ G2 \end{bmatrix} * \begin{bmatrix} btx1(t-t0) * e^{j\varphi 0} \\ btx2(t-t0) * e^{j\varphi 0} \end{bmatrix} = \begin{bmatrix} G1 \\ G2 \end{bmatrix} * \begin{bmatrix} \sqrt{2} * btx1(t-t0) * e^{j\varphi 0} \\ 0 \end{bmatrix}.$$

It can be seen that a transmit power of the signal *a*1 is doubled. In other words, the transmit power of the TX baseband cell 2 is completely shared to the TX baseband cell 1.

In the process, the transmit power of the TX baseband cell 2 is 100% shared to the TX baseband cell 1 for use. During actual working, a proportion of a shared power is completely flexible. For example, if the TX baseband cell 2 uses 50% of its transmit power, the TX baseband cell 2 may share the remaining 50% of its transmit power to the TX baseband cell 1. If there is another proportion, sharing is similar. On the contrary, the TX baseband cell 1 may also share its unused transmit power to the TX baseband cell 2 for use.

It may be understood that a process of processing uplink signals (namely, signals transmitted on the link 3 and the link 4) is opposite to that of processing downlink signals, and therefore details are not repeated.

For example, based on the signal processing apparatus shown in FIG. 6, a relationship between the signals *brx*1 and *brx2* respectively received by the TX baseband cell 1 and the TX baseband cell 2 and the signals received by the antenna satisfies the following formula:

$$\begin{bmatrix} brx1 \\ brx2 \end{bmatrix} = \begin{bmatrix} G3 \\ G4 \end{bmatrix} * \begin{bmatrix} a1(t-t0) * e^{j\varphi 0} \\ a2(t-t0) * e^{j\varphi 0} \end{bmatrix}$$

G3 and *G*4 are respectively power amplifier coefficients of LNAs in the link 3 and the link 4, t0 is each of delays of the link 3 and the link 4 after delay correction, and $\varphi$0 is each of phases of the link 3 and the link 4 after phase correction. It can be seen that, for the uplink receive signals, the uplink signals *a*1 and *a*2 from the two different sectors become the two different baseband receive signals *brx*1 and *brx2*, which are respectively received by two different RX baseband cells. The signals *a*1 and *a*2 do not cause crosstalk to reception of the baseband signals of the other party, and no additional loss is caused. Therefore, uplink receive performance is not affected.

Based on a same concept, an embodiment of this application further provides a remote radio unit. The remote radio unit may include the structure of the remote radio unit in FIG. 5, for example, including a first power balancing module or a second power balancing module, and may be configured to implement a function of the first power balancing module or the second power balancing module. Optionally, the remote radio unit may further include at least one of N transmit channels, N receive channels, and a feedback circuit, and may be further configured to implement a function of at least one of the N transmit channels, the N receive channels, and the feedback circuit. For description of the structure, refer to the descriptions in FIG. 5 and the corresponding embodiments. Details are not described again.

Based on a same concept, an embodiment of this application further provides an antenna unit (or an antenna). The antenna unit may include the structure of the antenna unit in FIG. 5, for example, including a third power balancing module and N antenna ports, and may be configured to implement functions of the third power balancing module and the N antenna ports. For description of the structure, refer to the descriptions in FIG. 5 and the corresponding embodiments. Details are not described again.

Based on a same concept, an embodiment of this application further provides a communication system. The communication system may include the structure shown in FIG. 5, or include the remote radio unit and/or the antenna unit shown in FIG. 5, and is configured to implement a function of the remote radio unit and/or the antenna unit. For description of the structure, refer to the descriptions in FIG. 5 and the corresponding embodiments. Details are not described again.

Based on a same concept, an embodiment of this application further provides a base station. The base station may include at least one of a baseband processing unit, a remote radio unit connected to the baseband processing unit, and an antenna unit. For example, the base station may include the remote radio unit and/or the antenna unit shown in FIG. 5, and is configured to implement a function of the remote radio unit and/or the antenna unit. For description of the structure, refer to the descriptions in FIG. 5 and the corresponding embodiments. Details are not described again. The base station may include the structure shown in FIG. 2.

Although preferred embodiments of this application are described, a person skilled in the art can make changes and modifications to these embodiments after they learn of a basic inventive concept. Therefore, the appended claims are intended to be construed as to cover the preferred embodiments and all changes and modifications falling within the scope of this application.

It is clear that a person skilled in the art can make various modifications and variations to embodiments of this application without departing from the scope of embodiments of this application. In this case, this application is intended to cover these modifications and variations of the embodiments of this application provided that they fall within the scope of protection defined by the following claims and their equivalent technologies.

## Claims

1. A signal processing system, comprising N baseband transmit units, a first power balancing module, a second power balancing module, N baseband receive units, and an antenna unit, wherein the antenna unit comprises N antenna ports and a third power balancing module, and N is a positive integer greater than 1;

   the N baseband transmit units are configured to generate first digital signals to be sent through the N antenna ports;
   the first power balancing module is configured to perform power balancing on the first digital signals respectively from the N baseband transmit units;
   the third power balancing module is configured to: perform power balancing on first high-frequency signals, wherein the first high-frequency signals are obtained based on power-balanced first digital signals, and send power-balanced first high-frequency signals to the N antenna ports respectively; and is further configured to perform power balancing on second high-frequency signals received through the N antenna ports respectively;
   the second power balancing module is configured to: perform power balancing on second digital signals, and send power-balanced second digital signals to the N baseband receive units respectively, wherein the second digital signals are obtained based on power-balanced second high-frequency signals; and
   the N baseband receive units are configured to perform baseband processing on the power-balanced second digital signals.

2. The signal processing system according to claim 1, wherein the first power balancing module is specifically configured to perform power balancing on the first digital signals respectively from the N baseband transmit units based on a first power balancing matrix, and the third power balancing module is specifically configured to perform power balancing on the first high-frequency signals based on a second power balancing matrix, wherein the first power balancing matrix and the second power balancing matrix are inverse matrices of each other; and/or
   the second power balancing module is specifically configured to perform power balancing on the second digital signals based on a third power balancing matrix, and the third power balancing module is specifically configured to perform power balancing on the second high-frequency signals based on the second power balancing matrix, wherein the third power balancing matrix and the second power balancing matrix are inverse matrices of each other.

3. The signal processing system according to claim 1 or 2, wherein the first power balancing module is specifically configured to send the power-balanced first digital signals to N transmit channels, wherein the first high-frequency signals are obtained by the N transmit channels based on the power-balanced first digital signals;

   the second power balancing module is specifically configured to receive the second digital signals from the N receive channels, wherein the second digital signals are obtained by the N transmit channels based on the power-balanced second high-frequency signals;
   each transmit channel comprises a first amplitude-phase correction module and a first delay correction module, wherein the first amplitude-phase correction module is configured to correct a signal amplitude and a signal phase of the transmit channel, so that signal amplitudes of the N transmit channels are the same and signal phases of the N transmit channels are the same; and the first delay correction module is configured to correct a signal delay of the transmit channel, so that signal delays of the N transmit channels are the same; and
   each receive channel comprises a second amplitude-phase correction module and a second delay correction module, wherein the second amplitude-phase correction module is configured to correct a signal amplitude and a signal phase of the receive channel, so that signal amplitudes of the N receive channels are the same and signal phases of the N receive channels are the same; and the second delay correction module is configured to correct a signal delay of the receive channel, so that signal delays of the N receive channels are the same.

4. The signal processing system according to claim 3, wherein the signal processing system further comprises a first amplitude-phase determining module and a first feedback circuit;

the first feedback circuit is configured to obtain the first high-frequency signals respectively output by the N transmit channels;
the first amplitude-phase determining module is configured to determine a first signal amplitude difference, a first signal phase difference, and a first signal delay difference based on the first high-frequency signals respectively output by the N transmit channels;
the first amplitude-phase correction module on each transmit channel is specifically configured to correct the signal amplitude of the transmit channel based on the first signal amplitude difference, and correct the phase of the transmit channel based on the first signal phase difference; and
the first delay correction module on each transmit channel is specifically configured to correct the signal delay of the transmit channel based on the first signal delay difference.

5. The signal processing system according to claim 3 or 4, wherein the signal processing system further comprises a second amplitude-phase determining module and a second feedback circuit;

the second feedback circuit is configured to obtain the power-balanced second high-frequency signals respectively input by the N receive channels;
the channel correction module is configured to determine a second signal amplitude difference, a second signal phase difference, and a second signal delay difference based on the power-balanced second high-frequency signals respectively input by the N receive channels;
the second amplitude-phase correction module on each receive channel is specifically configured to correct the signal amplitude of the receive channel based on the second signal amplitude difference, and correct the phase of the receive channel based on the second signal phase difference; and
the second delay correction module on each receive channel is specifically configured to correct the signal delay of the receive channel based on the second signal delay difference.

6. A remote radio unit, comprising a first power balancing module and a second power balancing module, wherein

the first power balancing module is configured to perform power balancing on first digital signals respectively from N baseband transmit units, wherein balanced first digital signals are used to obtain first high-frequency signals, the first high-frequency signals are used to be sent to an antenna having N antenna ports, and N is an integer greater than 1; and
the second power balancing module is configured to: perform power balancing on second digital signals, and send power-balanced second digital signals to N baseband receive units respectively, wherein the second digital signals are obtained based on second high-frequency signals received through the N antenna ports of the antenna.

7. The remote radio unit according to claim 6, wherein the first power balancing module is specifically configured to perform power balancing on the first digital signals respectively from the N baseband transmit units based on a first power balancing matrix, wherein the first power balancing matrix and a second power balancing matrix are inverse matrices of each other; and/or

the second power balancing module is specifically configured to perform power balancing on the second digital signals based on a third power balancing matrix, wherein the third power balancing matrix and the second power balancing matrix are inverse matrices of each other, wherein
the second power balancing matrix is used by the antenna to perform power balancing on the first high-frequency signals, and is used by the antenna to perform power balancing on the second high-frequency signals.

8. The remote radio unit according to claim 6 or 7, wherein the first power balancing module is specifically configured to send the balanced first digital signals to N transmit channels, wherein the N antenna channels are connected to the antenna;

the second power balancing module is specifically configured to receive the second digital signals from N receive channels;
each transmit channel comprises a first amplitude-phase correction module and a first delay correction module, wherein the first amplitude-phase correction module is configured to correct a signal amplitude and a signal phase of the transmit channel, so that signal amplitudes of the N transmit channels are the same and signal phases of the N transmit channels are the same; and the first delay correction module is configured to correct a signal delay of the transmit channel, so that signal delays of the N transmit channels are the same; and

each receive channel comprises a second amplitude-phase correction module and a second delay correction module, wherein the second amplitude-phase correction module is configured to correct a signal amplitude and a signal phase of the receive channel, so that signal amplitudes of the N receive channels are the same and signal phases of the N receive channels are the same; and the second delay correction module is configured to correct a signal delay of the receive channel, so that signal delays of the N receive channels are the same.

9. The remote radio unit according to claim 8, wherein the remote radio unit further comprises a first feedback circuit, configured to obtain the first high-frequency signals respectively output by the N transmit channels, wherein the first high-frequency signals respectively output by the N transmit channels are used to determine a first signal amplitude difference, a first signal phase difference, and a first signal delay difference;

the first amplitude-phase correction module on each transmit channel is specifically configured to correct the signal amplitude of the transmit channel based on the first signal amplitude difference, and correct the phase of the transmit channel based on the first signal phase difference; and
the first delay correction module on each transmit channel is specifically configured to correct the signal delay of the transmit channel based on the first signal delay difference.

10. The remote radio unit according to claim 8 or 9, wherein the signal processing system further comprises a second amplitude-phase determining module and a second feedback circuit;

the second feedback circuit is configured to obtain power-balanced second high-frequency signals respectively input by the N receive channels, wherein the power-balanced second high-frequency signals respectively input by the N receive channels are used to determine a second signal amplitude difference, a second signal phase difference, and a second signal delay difference;
the second amplitude-phase correction module on each receive channel is specifically configured to correct the signal amplitude of the receive channel based on the second signal amplitude difference, and correct the phase of the receive channel based on the second signal phase difference; and
the second delay correction module on each receive channel is specifically configured to correct the signal delay of the receive channel based on the second signal delay difference.

11. An antenna unit, comprising N antenna ports and a third power balancing module, wherein N is an integer greater than 1;

the N antenna ports are configured to receive and send high-frequency signals; and
the third power balancing module is configured to:

receive first high-frequency signals sent by a remote radio unit, perform power balancing on the first high-frequency signals, and send power-balanced first high-frequency signals to the N antenna ports respectively; and
perform power balancing on second high-frequency signals respectively received through the N antenna ports, and send power-balanced second high-frequency signals to the remote radio unit.

12. The antenna unit according to claim 11, wherein the third power balancing module is specifically configured to:

perform power balancing on the first high-frequency signals based on a second power balancing matrix, wherein the second power balancing matrix and a first power balancing matrix are inverse matrices of each other, the first power balancing matrix is used by the remote radio unit to perform power balancing on first digital signals respectively from N baseband transmit units, and balanced first digital signals are used to obtain the first high-frequency signals; and/or
perform power balancing on the second high-frequency signals based on the second power balancing matrix, wherein the second power balancing matrix and a third power balancing matrix are inverse matrices of each other, and the third power balancing matrix is used by the remote radio unit to perform power balancing on second digital signals obtained based on the second high-frequency signals.

13. A base station, comprising the signal processing system according to any one of claims 1 to 5, or comprising the remote radio unit according to any one of claims 6 to 10, or comprising the antenna unit according to claim 11 or 12.

14. A communication system, comprising:

a baseband processing unit;
at least one remote radio unit according to any one of claims 6 to 10 connected to the baseband processing unit; and
the antenna unit according to claim 11 or 12.

FIG. 1

FIG. 2

Carrier 1

Carrier 2

Power
amplifier

FIG. 3

FIG. 4

FIG. 5

EP 4 572 365 A1

FIG. 6

EP 4 572 365 A1

## INTERNATIONAL SEARCH REPORT

| International application No. |
|---|
| **PCT/CN2023/104983** |

### A. CLASSIFICATION OF SUBJECT MATTER

H04W16/24(2009.01)i

According to International Patent Classification (IPC) or to both national classification and IPC

### B. FIELDS SEARCHED

Minimum documentation searched (classification system followed by classification symbols)

IPC: H04W H04L H04B H01Q

Documentation searched other than minimum documentation to the extent that such documents are included in the fields searched

Electronic data base consulted during the international search (name of data base and, where practicable, search terms used)

CNABS, CNKI, VEN, VCN: 功率, 均衡, 共享, 矩阵, 电桥, 射频, 高频, 射频拉远, power, equalization, share, matrix, bridge, RRU

### C. DOCUMENTS CONSIDERED TO BE RELEVANT

| Category* | Citation of document, with indication, where appropriate, of the relevant passages | Relevant to claim No. |
|---|---|---|
| X | WO 2018040020 A1 (HUAWEI TECHNOLOGIES CO., LTD.) 08 March 2018 (2018-03-08) description, page 1, line 10 to page 6, line 16, and page 7, line 11 to page 24, line 19 | 1-14 |
| X | CN 110768698 A (SHANGHAI HUAWEI TECHNOLOGIES CO., LTD.) 07 February 2020 (2020-02-07) description, paragraphs 47-106 | 1-14 |
| X | CN 113315550 A (SHANGHAI HUAWEI TECHNOLOGIES CO., LTD.) 27 August 2021 (2021-08-27) description, paragraphs 43-129 | 1-14 |
| A | CN 114244414 A (HUAWEI TECHNOLOGIES CO., LTD.) 25 March 2022 (2022-03-25) entire document | 1-14 |
| A | US 2016226124 A1 (TYCO ELECTRONICS CORPORATION) 04 August 2016 (2016-08-04) entire document | 1-14 |
| A | US 2017125873 A1 (HONEYWELL INTERNATIONAL INC.) 04 May 2017 (2017-05-04) entire document | 1-14 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 September 2023** | **28 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/104983**

| Patent document cited in search report | | | Publication date (day/month/year) | Patent family member(s) | | | Publication date (day/month/year) |
|---|---|---|---|---|---|---|---|
| WO | 2018040020 | A1 | 08 March 2018 | CN | 109644163 | A | 16 April 2019 |
| CN | 110768698 | A | 07 February 2020 | US | 2021152225 | A1 | 20 May 2021 |
| | | | | WO | 2020020283 | A1 | 30 January 2020 |
| | | | | EP | 3817241 | A1 | 05 May 2021 |
| | | | | EP | 3817241 | A4 | 04 August 2021 |
| | | | | JP | 2021532670 | A | 25 November 2021 |
| | | | | JP | 7305744 | B2 | 10 July 2023 |
| CN | 113315550 | A | 27 August 2021 | WO | 2021170057 | A1 | 02 September 2021 |
| | | | | EP | 4089929 | A1 | 16 November 2022 |
| | | | | US | 2022407569 | A1 | 22 December 2022 |
| CN | 114244414 | A | 25 March 2022 | WO | 2023077921 | A1 | 11 May 2023 |
| US | 2016226124 | A1 | 04 August 2016 | WO | 2016126619 | A1 | 11 August 2016 |
| | | | | EP | 3254332 | A1 | 13 December 2017 |
| | | | | CA | 2975909 | A1 | 11 August 2016 |
| | | | | US | 9502746 | B2 | 22 November 2016 |
| US | 2017125873 | A1 | 04 May 2017 | None | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211060794